(19) Europäisches Patentamt

European Patent Office

Office européen des brevets

(11) Veröffentlichungsnummer: **0 266 807 B1**

(12) **EUROPÄISCHE PATENTSCHRIFT**

(45) Veröffentlichungstag der Patentschrift: **03.06.92**

(21) Anmeldenummer: **87201601.9**

(22) Anmeldetag: **24.08.87**

(51) Int. Cl.⁵: **B01D 53/36**, B01J 23/22, B01J 23/34, B01J 23/84, B01J 29/06

(54) Verfahren zur katalytischen Reduktion von NO.

(30) Priorität: **02.10.86 DE 3633493**

(43) Veröffentlichungstag der Anmeldung:
**11.05.88 Patentblatt 88/19**

(45) Bekanntmachung des Hinweises auf die
Patenterteilung:
**03.06.92 Patentblatt 92/23**

(84) Benannte Vertragsstaaten:
**AT DE ES GB IT SE**

(56) Entgegenhaltungen:
WO-A-86/05712          DE-A- 1 542 084
DE-A- 2 023 813        DE-A- 2 504 027
DE-C- 2 525 880        FR-A- 2 243 152
US-A- 3 900 428        US-A- 4 003 854
US-A- 4 046 888

INDUSTRIAL & ENGINEERING CHEMISTRY,
Band 25, Nr.2, Juni 1986, Seiten 179-186,
American Chemical Society, Washington,
DC, US; W.C. WONG et al.: "Reduction of NO
with NH3 on Al2O3- and TiO2-supported metal oxide catalysts"

(73) Patentinhaber: **METALLGESELLSCHAFT AG**
**Reuterweg 14 Postfach 3724**
**W-6000 Frankturt/M.1(DE)**

(72) Erfinder: **Weisweiler, Werner,**
**Prof.Dr.rer.nat.habil.Dipl.Ing**
**Goethering 107**
**W-7537 Remchingen 2(DE)**
Erfinder: **Retzlaff, Burkard, Dipl.-Chem.**
**Veilchenstrasse 9**
**W-7500 Karlsruhe(DE)**
Erfinder: **Hochstein, Bernd, Dipl.-Chem.**
**Adlerstrasse 40**
**W-7500 Karlsruhe(DE)**

(74) Vertreter: **Rieger, Harald, Dr.**
**Reuterweg 14**
**W-6000 Frankturt am Main(DE)**

IDEM

INDUSTRIAL & ENGINEERING CHEMISTRY, Band 19, 1980, Seiten 218-225, American Chemical Society, Washington, DC,US; J.R. KLOVSKY et al.: "Evaluation of a new Zeolitic catalyst for NOx reduction with NH3"

IDEM

## Beschreibung

Die Erfindung bezieht sich auf ein Verfahren zur katalytischen Reduktion von in einem Verbrennungsabgas enthaltenem NO mit NH3, bei dem das NO-haltige Verbrennungsabgas mit NH3 im Molverhältnis 1 : 1 gemischt und die Mischung am Katalysator bei erhöhter Temperatur sowie bei Normaldruck zur Reaktion gebracht wird, wobei der Katalysator aus einem Träger und einer katalytisch aktiven Substanz zusammengesetzt ist und wobei der Träger aus Al2O3 oder aus Al2O3 und SiO2 und die katalytisch aktive Substanz aus V2O5, MnO2, CuO, Fe2O3 und/oder NiO besteht, welche auf den Träger in einer Menge von 0,5 bis 20 Gew.% aufgebracht ist.

Abgase, die bei der Verbrennung von Brennstoffen mit Luftsauerstoff entstehen, können neben anderen Stickoxiden bis zu 1 000 ppm NO enthalten, wobei die anderen Stickoxide N2O und NO2 in wesentlich geringerer Konzentration vorliegen. Neben den Stickoxiden sind in den Abgasen der Verbrennungsanlagen noch SO2, CO2, H2O und N2 enthalten. Die Stickoxide und das SO2 müssen aus den Abgasen entfernt werden, da sie auf die Umwelt schädlich wirken.

Es ist bekannt, das in Abgasen enthaltene NO in Gegenwart von SO2 mit NH3 katalytisch zu reduzieren, wobei die Katalystoren aus einem Träger und einer aktiven Komponente bestehen. Als Träger wird Al2O3 oder TiO2 verwendet, und als aktive Komponente kommen Fe2O3, Cr2O3 und/oder V2O5 zur Anwendung (Wong und Nobe, Int. Eng. Chem. Prod. Res. Def. 1986, 25, S. 179 bis 186). Ferner ist aus der DE-C-2 525 880 ein Verfahren zum Entfernen von Stickstoffoxiden aus Abgasen, die neben Stickstoffoxiden schwefeloxide enthalten, bekannt, bei dem die Abgase im Gemisch mit Ammoniak bei Temperaturen im Bereich von 250 bis 550°C über einen porenhaltigen Katalysator, der eine Eisen und/oder Kupfer enthaltende aktive Komponente auf einem Siliziumdioxid-Aluminiumoxid-Träger aufweist, geleitet werden. Bei diesem Verfahren ist vorgesehen, daß man einen Trägerkatalysator einsetzt, der mindestens 60 Gew.% Siliziumdioxid enthält und dessen Poren mit einem Durchmesser von 150 Å oder mehr einen Anteil von mindestens 0,15 cm3/g ausmachen. Es ist auch vorgesehen, daß die Oxide von Eisen oder Kupfer als aktive Komponente eingesetzt werden und daß die aktive Komponente in einer Menge von 0,5 bis 20 Gew.%, bezogen auf den Träger, eingesetzt wird. Das aus der DE-PS 2 525 880 bekannte Verfahren wird in einem Füllkörper- oder Honigwabenreaktor durchgeführt, wobei der Druckverlust möglichst niedrig gehalten werden soll. Die bei diesem Verfahren verwendeten Katalysatoren werden beispielsweise durch Imprägnierung hergestellt, anschließend bei 100 bis 150°C getrocknet und danach bei 300 bis 600°C gebrannt.

Das aus der DE-C-2 525 880 bekannte Verfahren hat den Nachteil, daß die Langzeitstabilität des Katalysators - also die gleichbleibend hohe Aktivität des Katalysators während eines langen Zeitraums - noch verbesserungsbedürftig ist. Daher liegt der Erfindung die Aufgabe zugrunde, ein Verfahren der eingangs genannten Art zu schaffen, das eine weitgehend quantitative Reduktion des NO zu N2 gewährleistet, die Bildung der unerwünschten Stickoxide N2O und NO2 vermeidet sowie über einen langen Zeitraum und bei unterschiedlichen Temperaturen störungsfrei durchführbar ist.

Die der Erfindung zugrundeliegende Aufgabe wird dadurch gelöst, daß die katalytische Reduktion von NO in der Wirbelschicht bei 185 bis 500°C durchgeführt wird, wobei die Katalysatorteilchen einen Durchmesser von 0,1 bis 3 mm aufweisen. Nach der Erfindung ist es besonders vorteilhaft, wenn die katalytische Reduktion von NO in der zirkulierenden Wirbelschicht durchgeführt wird. Da die Geschwindigkeit der katalytischen NO-Reduktion maßgeblich von Diffusionsvorgängen bestimmt wird, kann insbesondere in der zirkulierenden Wirbelschicht eine längere Verweilzeit der NO- und NH3-haltigen Gasmischung am Katalysator erreicht werden, ohne daß es zu Änderungen der Arbeitstemperatur kommt.

Nach der Erfindung ist ferner vorgesehen, daß die aus dem NO-haltigen Abgas und NH3 bestehende Mischung dem Katalysator in einer Menge von 0,2 bis 20 Nl/Min. und pro g Katalysator zugeführt wird. Durch diese Verfahrensmaßnahme wird bei hohem Gasdurchsatz eine hohe Entstickungsleistung erreicht. In weiterer Ausgestaltung der Erfindung ist vorgesehen, daß der Träger des Katalysators aus reinem α-Al2O3 besteht, welches einen Hauptporenradius von 90 bis 110 nm hat oder daß der Träger des Katalysators aus 5 bis 30 Gew.% Al2O3 und Rest SiO2 zusammengesetzt ist sowie einen Hauptporenradius von 0,5 bis 2 nm hat. Diese Träger gewährleisten einerseits eine hohe Aktivität des Katalysators und sind andererseits den mechanischen Anforderungen einer Wirbelschicht gewachsen. In vielen Fällen ist es vorteilhaft, wenn der Katalysator als katalytisch aktive Substanz 0,5 bis 4 Gew.% Y2O3 enthält.

Wenn das erfindungsgemäße Verfahren bei den Bedingungen durchgeführt wird, die in den Ansprüchen 7 bis 10 angegeben sind, erfolgt die NO-Reduktion mit einem Reduktionsgrad von 98 bis 100 %, wobei als Reduktionsprodukt nahezu quantitativ N2 entsteht. Die Katalysatoren werden erfindungsgemäß durch Tränken der aus dem Träger bestehenden Teilchen mit einer Lösung von Salzen der katalytisch aktiven Substanzen, Wirbelschichttrocknung der getränkten Teilchen bei 150° C während 1 bis 2 Stunden und Glühen der getrockneten Teilchen bei 550 bis 600° C während 1 bis 2 Stunden hergestellt.

Leistung und Selektivität des Katalysators konnten durch das synergistische Zusammenwirken des Trägers und der katalytisch aktiven Komponenten einerseits und den Bedingungen einer Wirbelschicht andererseits in überraschender Weise gesteigert werden, wobei die Arbeitstemperatur des Verfahrens innerhalb bestimmter Grenzen variabel ist. Damit kann das Verfahren den praktischen Anforderungen sehr gut angepaßt werden. Die gute Leistung des Verfahrens wird darauf zurückgeführt, daß im Träger des Katalysators eine durch den Hauptporenradius maßgeblich definierte Porenstruktur vorliegt, welche die Bildung einer großen Zahl von aktiven Zentren begünstigt und die optimale Verankerung der katalytisch wirksamen Komponenten gewährleistet und daß die aktiven Zentren des Katalysators durch die ständige mechanische Beanspruchung in der Wirbelschicht von Verunreinigungen freigehalten werden.

Der Gegenstand der Erfindung wird nachfolgend anhand von mehreren Ausführungsbeispielen näher erläutert. Die nachfolgend beschriebenen Versuche wurden mit Gasmischungen durchgeführt, die 0,05 bis 1 Vol.% NO, 1 bis 5 Vol.% $O_2$ und Rest $N_2$ enthielten. Bei allen Versuchen wurde ein Molverhältnis NO : $NH_3$ = 1 : 1 eingehalten. Dies führte zu einem außerordentlich geringen Ammoniakschlupf. Alle Versuche wurden bei Normaldruck durchgeführt, was die im System vorhandenen Druckverluste einschließt. Bei den Versuchen kam es nicht zur Bildung von $NH_4NO_2$ und $NH_4NO_3$, da diese Verbindungen nur bei Arbeitstemperaturen unterhalb 170° C entstehen. Die Untersuchungen wurden zunächst vorzugsweise in einem mit dem Katalysator gefüllten Festbettreaktor durchgeführt; sie wurden anschließend in einem Wirbelschichtreaktor wiederholt, wobei sich ein Reaktor mit zirkulierender Wirbelschicht besonders bewährt hat. Obwohl die Reduktion von NO durch $NH_3$ zu $N_2$ stark exotherm ist, wird der Katalyator durch die entstehende Wärme nicht geschädigt, denn der NO-Gehalt des Gases ist relativ gering und die bei der NO-Reduktion gebildete Wärme wird durch die große Inertgasmenge schnell abgeführt.

Das als Träger verwendete reine $\alpha$-$Al_2O_3$ hatte folgende Verunreinigungen: 400 bis 500 ppm $Na_2O$, 900 bis 1 100 ppm $SiO_2$, 400 bis 500 ppm CaO und 80 bis 120 ppm MgO. Dieser Träger hatte eine innere Oberfläche von 5 bis 7 m2/g sowie ein totales Porenvolumen von 40 bis 70 cm3/100 g. Das als Träger verwendete Aluminiumsiliciumoxid hatte eine innere Oberfläche von 20 bis 100 m2/g sowie ein totales Porenvolumen von 50 bis 70 cm3/g. Zum Aufbringen der katalytisch wirksamen Komponente auf den Träger wurden Salze verwendet, wie z.B. Vanadium(III)chlorid, Mangannitrat, Kupfernitrat, Eisennitrat und Nickelnitrat. In vielen Fällen wurden die getränkten Teilchen vor dem Trocknen mit dem reinen Lösungsmittel gewaschen, das in einer Menge von 5 ml/g Trägermaterial zur Anwendung kam.

Die einzelnen Versuche erbrachten folgende Ergebnisse:

1. Auf $\alpha$-$Al_2O_3$-Pellets wurden 7,8 Gew.% $V_2O_5$ aufgebracht. Bei 270 bis 310° C wurde an diesem Katalysator ein NO-Reduktionsgrad von 100 % erreicht.

2. Auf $\alpha$-$Al_2O_3$-Pellets wurden durch Doppelimprägnierung 14,5 Gew.% $MnO_2$ aufgebracht. Bei 250 bis 300° C wurde an diesem Katalysator ein NO-Reduktionsgrad von 93 % erreicht.

3. $\alpha$-$Al_2O_3$-Pellets wurden mit einer Lösung getränkt, die 0,1 Mol Mangan und 0,1 Mol Kupfer enthielt. Dieser Katalysator erbrachte bei einer Temperatur von 230 bis 260° C einen NO-Reduktionsgrad von 95 %.

4. $\alpha$-$Al_2O_3$-Pellets wurden mit einer Lösung getränkt, die 0,1 Mol Eisen und 0,1 Mol Kupfer enthielt. Bei 260 bis 330° C erbrachte dieser Katalysator einen NO-Reduktionsgrad von 90 %.

5. $\alpha$-$Al_2O_3$-Pellets wurden mit einer Lösung getränkt, die je 0,5 Mol Vanadium und Mangan enthielt. Bei einer Temperatur von 250 bis 320° C wurde an diesem Katalysator ein NO-Reduktionsgrad von 98 % erreicht.

6. $\alpha$-$Al_2O_3$-Pellets wurden mit einer Lösung getränkt, die 0,25 Mol Mangan, 0,1 Mol Eisen und 0,01 Mol Yttrium enthielt. Dieser Katalysator erbrachte bei 245 bis 305° C einen NO-Reduktionsgrad von 92 %.

7. $\alpha$-$Al_2O_3$-Pellets wurden mit einer Lösung imprägniert, die je 0,1 Mol Vanadium und Nickel enthielt. Der Katalysator erbrachte bei 460 bis 500° C einen NO-Reduktionsgrad von 90 %.

8. $\alpha$-$Al_2O_3$-Pellets wurden mit einer Lösung imprägniert, die 0,25 Mol Mangan und 0,1 Mol Eisen enthielt. Bei 220 bis 270° C erbrachte der Katalysator einen NO-Reduktionsgrad von 95 %.

9. $\alpha$-$Al_2O_3$-Pellets wurden mit einer Lösung imprägniert, die je 0,5 Mol Mangan und Kupfer enthielt. Der Katalysator erbrachte bei 200 bis 250° C einen NO-Reduktionsgrad von 98 %.

10. $\alpha$-$Al_2O_3$-Pellets wurden mit einer Lösung imprägniert, die 0,25 Mol Mangan und 0,01 Mol Yttrium enthielt. Der Katalysator erbrachte bei 220 bis 280° C einen NO-Reduktionsgrad von 95 %.

11. Aus $Al_2O_3$ und $SiO_2$ bestehende Pellets, die einen Hauptporenradius von 1 nm hatten, wurden mit einer Lösung imprägniert, die je 0,5 Mol Mangan und Kupfer enthielt. Bei 185 bis 300° C

4

erbrachte dieser Katalysator einen NO-Reduktionsgrad von 99 %.

12. Aus Al2O3 und SiO2 bestehende Pellets, die einen Hauptporenradius von 0,5 nm hatten, wurden mit einer Lösung imprägniert, welche 0,5 Mol Mangan und 0,5 Mol Kupfer enthielt. Dieser Katalysator erbrachte bei einer Temperatur von 250 bis 300°C einen NO-Reduktionsgrad von 96 %.

Bei der großtechnischen Anwendung des erfindungsgemäßen Verfahrens muß dafür gesorgt werden, daß der Katalysator nur bei der vorgesehenen Arbeitstemperatur mit der NO- und NH3-haltigen Gasmischung in Berührung kommt, da es insbesondere bei niedrigeren Temperaturen zu Schädigungen des Katalysators kommen kann (Kondensation des Wassers, Bildung von Säuren, Ablagerungen von Salzen). Außerdem ist darauf zu achten, daß die dem Katalysator zugeführte Gasmischung einen verminderten Staubgehalt hat.

**Patentansprüche**

1. Verfahren zur katalytischen Reduktion von in einem Verbrennungsabgas enthaltenen NO mit NH3, bei dem das NO-haltige Verbrennungsabgas mit NH3 im Molverhältnis 1 : 1 gemischt und die Mischung am Katalysator bei erhöhter Temperatur sowie bei Normaldruck zur Reaktion gebracht wird, wobei der Katalysator aus einem Träger und einer katalytisch aktiven Substanz zusammengesetzt ist und wobei der Träger aus Al2O3 oder aus Al2O3 und SiO2 und die katalytisch aktive Substanz aus V2O5, MnO2, CuO, Fe2O3, und/oder NiO besteht, welche auf den Träger in einer Menge von 0,5 bis 20 Gew.% aufgebracht ist, dadurch gekennzeichnet, daß die katalytische Reduktion von NO in einer Wirbelschicht bei 185 bis 500°c durchgeführt wird, wobei die Katalysatorteilchen einen Durchmesser von 0,1 bis 3 mm aufweisen.

2. Verfahren nach Anspruch 1, dadurch gekennzeichnet, daß die katalytische Reduktion von NO in der zirkulierenden Wirbelschicht durchgeführt wird.

3. Verfahren nach den Ansprüchen 1 bis 2, dadurch gekennzeichnet, daß die aus dem NO-haltigen Abgas und NH3 bestehende Mischung dem Katalysator in einer Menge von 0,2 bis 20 Nl/Min. und pro g Katalysator zugeführt wird.

4. Verfahren nach den Ansprüchen 1 bis 3, dadurch gekennzeichnet, daß der Träger aus reinem α-Al2O3 besteht, das einen Hauptporenradius von 90 bis 110 nm hat.

5. Verfahren nach den Ansprüchen 1 bis 3, dadurch gekennzeichnet, daß der Träger aus 5 bis 30 Gew.% Al2O3 und Rest SiO2 besteht und einen Hauptporenradius von 0,5 bis 2 nm hat.

6. Verfahren nach den Ansprüchen 1 bis 5, dadurch gekennzeichnet, daß der Katalysator als katalytisch aktive Substanz 0,5 bis 4 Gew.% Y2O3 enthält.

7. Verfahren nach den Ansprüchen 1 bis 4, dadurch gekennzeichnet, daß die Mischung aus dem NO-haltigen Gas und dem NH3 bei 270 bis 310°C an einem Katalysator zur Reaktion gebracht wird, dessen Träger aus reinem α-Al2O3 mit einem Hauptporenradius von 100 nm besteht und der 6 bis 8 Gew.% V2O5 enthält.

8. Verfahren nach den Ansprüchen 1 bis 4, dadurch gekennzeichnet, daß die Mischung aus dem NO-haltigen Gas und dem NH3 bei 250 bis 320°C an einem Katalysator zur Reaktion gebracht wird, dessen Träger aus reinem α-Al2O3 mit einem Hauptporenradius von 100 nm besteht und der 3 bis 8 Gew.% V2O5 und MnO2 enthält, wobei das Molverhältnis V2O5 : MnO2 = 1 : 1 beträgt.

9. Verfahren nach den Ansprüchen 1 bis 4, dadurch gekennzeichnet, daß die Mischung aus dem NO-haltigen Gas und dem NH3 bei 200 bis 250°C an einem Katalysator zur Reaktion gebracht wird, dessen Träger aus reinem α-Al2O3 mit einem Hauptporenradius von 100 nm besteht und der 3 bis 8 Gew.% MnO2 und CuO enthält, wobei das Molverhältnis MnO2 : CuO = 1 : 1 beträgt.

10. Verfahren nach den Ansprüchen 1 bis 3 und 5, dadurch gekennzeichet, daß die Mischung aus dem NO-haltigen Gas und dem NH3 bei 185 bis 300°C an einem Katalysator zur Reaktion gebracht wird, dessen Träger aus 5 bis 30 Gew.% Al2O3 und Rest SiO2 besteht sowie einen Hauptporenradius von 1 nm hat und der 3 bis 8 Gew.% MnO2 und CuO enthält, wobei das Molverhältnis MnO2 : CuO = 1 : 1 beträgt.

11. Verfahren nach den Ansprüchen 1 bis 10, dadurch gekennzeichnet, daß der Katalysator durch Tränken der aus dem Träger bestehenden Teilchen mit einer Lösung von Vanadium-, Mangan-, Kupfer-, Eisen-, Nickel-und/oder Yttriumsalzen, durch Wirbelschichttrocknung der getränkten Teilchen bei 150°C während 1 bis 2 Stunden und durch Glühen der getrockenten Teilchen bei 550 bis 600°C während 1 bis 2 Stunden hergestellt ist.

## Claims

1. A method for the catalytic reduction of NO contained in an exhaust gas from combustion, using $NH_3$, in which the NO-containing exhaust gas from combustion is mixed with $NH_3$ in a molar ratio of 1 : 1 and the mixture is caused to react on the catalyst at elevated temperature and at normal pressure, the catalyst being composed of a support and a catalytically active substance and the support consisting of $Al_2O_3$ or of $Al_2O_3$ and $SiO_2$ and the catalytically active substance consisting of $V_2O_5$, $MnO_2$, $CuO$, $Fe_2O_3$ and/or $NiO$, which is applied to the support in a quantity of 0.5 to 20% by weight, characterised in that the catalytic reduction of NO is performed in a fluidised bed at 185 to 500°C, the catalyst particles having a diameter of 0.1 to 3 mm.

2. A method according to claim 1, characterised in that the catalytic reduction of NO is performed in the circulating fluidised bed.

3. A method according to Claims 1 to 2, characterised in that the mixture consisting of the NO-containing exhaust gas and $NH_3$ is fed to the catalyst at a rate of 0.2 to 20 Nl/min and per gramme of catalyst.

4. A method according to Claims 1 to 3, characterised in that the support consists of pure $\alpha$-$Al_2O_3$ which has a main pore radius of 90 to 110 nm.

5. A method according to Claims 1 to 3, characterised in that the support consists of 5 to 30% by weight $Al_2O_3$ and remainder $SiO_2$ and has a main pore radius of 0.5 to 2 nm.

6. A method according to Claims 1 to 5, characterised in that the catalyst contains 0.5 to 4% by weight $Y_2O_3$ as the catalytically active substance.

7. A method according to Claims 1 to 4, characterised in that the mixture of the NO-containing gas and the $NH_3$ is caused to react on a catalyst at 270 to 310°C, the support of which catalyst consists of pure $\alpha$-$Al_2O_3$ with a main pore radius of 100 nm and contains 6 to 8% by weight $V_2O_5$.

8. A method according to Claims 1 to 4, characterised in that the mixture of the NO-containing gas and the $NH_3$ is caused to react on a catalyst at 250 to 320°C, the support of which catalyst consists of pure $\alpha$-$Al_2O_3$ with a main pore radius of 100 nm and which contains 3 to 8% by weight $V_2O_5$ and $MnO_2$, the molar ratio of $V_2O_5$ : $MnO_2$ being 1 : 1.

9. A method according to Claims 1 to 4, characterised in that the mixture of the NO-containing gas and the $NH_3$ is caused to react on a catalyst at 200 to 250°C, the support of which catalyst consists of pure $\alpha$-$Al_2O_3$ with a main pore radius of 100 nm and contains 3 to 8% by weight $MnO_2$ and $CuO$, the molar ratio of $MnO_2$ : $CuO$ being 1 : 1.

10. A method according to Claims 1 to 3 to 5, characterised in that the mixture of the NO-containing gas and the $NH_3$ is caused to react on a catalyst at 185 to 300°C, the support of which catalyst consists of 5 to 30% by weight $Al_2O_3$ and remainder $SiO_2$ and has a main pore radius of 1 nm and which contains 3 to 8% by weight $MnO_2$ and $CuO$, the molar ratio of $MnO_2$ : $CuO$ being 1 : 1.

11. A method according to Claims 1 to 10, characterised in that the catalyst is produced by impregnating the particles consisting of the support with a solution of salts of vanadium, manganese, copper, iron, nickel and/or yttrium, by fluidised bed drying of the impregnated particles at 150°C for 1 to 2 hours and by roasting the dried particles at 550 to 600°C for 1 to 2 hours.

## Revendications

1. Procédé de réduction catalytique par NH3 du NO contenu dans un gaz de combustion, qui consiste à mélanger le gaz de combustion contenant du NO à du NH3 en un rapport molaire de 1:1 et à mettre le mélange à réagir sur le catalyseur à une température élevée ainsi que sous la pression normale, le catalyseur étant composé d'un support et d'une substance active catalytiquement et le support étant constitué d'Al2O3 ou d'Al2O3 et de SiO2, et la substance active catalytiquement de V2O5, de MnO2, de Cuo, de Fe2O3 et/ou de NiO, déposée sur le support en une quantité de 0,5 à 20 % en poids, caractérisé en ce qu'il consiste à effectuer la réduction catalytique de NO dans un lit fluidisé entre 185 et 500°C, les particules de catalyseur ayant un diamètre de 0,1 à 3 mm.

**2.** Procédé suivant la revendication 1, caractérisé en ce qu'il consiste à effectuer la réduction catalytique de NO en lit fluidisé circulant.

**3.** Procédé suivant la revendication 1 ou 2, caractérisé en ce qu'il consiste à ajouter au catalyseur le mélange constitué du gaz contenant du NO et du NH3 en une quantité de 0,2 à 20 litres normaux/mn et par g de catalyseur.

**4.** Procédé suivant l'une des revendications 1 à 3, caractérisé en ce que le support est en A12O3-$\alpha$ pure ayant un rayon principal de pores de 90 à 110 nm.

**5.** Procédé suivant l'une des revendications 1 à 3, caractérisé en ce que le support est constitué de 5 à 30 % en poids d'Al2O3, le reste étant du SiO2, et a un rayon principal de pores de 0,5 à 2 nm.

**6.** Procédé suivant l'une des revendications 1 à 5, caractérisé en ce que le catalyseur contient, comme substance active catalytiquement, de 0,5 à 4 % en poids de Y2O3.

**7.** Procédé suivant l'une des revendications 1 à 4, caractérisé en ce qu'il consiste à mettre le mélange constitué du gaz contenant NO et du NH3 à réagir entre 270 et 310°C sur un catalyseur, dont le support est constitué d'Al2O3-$\alpha$ pure ayant un rayon principal de pores de 100 nm et contenant de 6 à 8 % en poids de V2O5.

**8.** Procédé suivant l'une des revendications 1 à 4, caractérisé en ce qu'il consiste à mettre le mélange constitué du gaz contenant NO et du NH3 à réagir entre 250 et 320°C sur un catalyseur dont le support est constitué d'Al2O3-$\alpha$ pure ayant un rayon principal de pores de 100 nm, et qui contient de 3 à 8 % en poids de V2O5 et de MnO2, le rapport molaire de V2O5 à MnO2 étant de 1:1.

**9.** Procédé suivant l'une des revendications 1 à 4, caractérisé en ce qu'il consiste à mettre le mélange constitué du gaz contenant NO et du NH3, à réagir entre 200 et 250°C sur un catalyseur, dont le support est constitué d'Al2O3-$\alpha$ pure ayant un rayon principal de pores de 100 nm, et qui contient de 3 à 8 % en poids de MnO2 et de CuO, le rapport molaire de MnO2 à CuO étant de 1:1.

**10.** Procédé suivant l'une des revendications 1 à 3 et 5, caractérisé en ce qu'il consiste à mettre le mélange constitué du gaz contenant NO et du NH3, à réagir entre 185 et 300°C sur un catalyseur dont le support est constitué de 5 à 30 % en poids d'Al2O3, le reste étant du SiO2, ayant un rayon principal de pores de 1 nm, et qui contient de 3 à 8 % en poids de MnO2 et de CuO, le rapport molaire de MnO2 à CuO étant de 1:1.

**11.** Procédé suivant l'une des revendications 1 à 10, caractérisé en ce qu'il consiste à préparer le catalyseur par imprégnation de particules constituées du support par une solution de sels de vanadium, de manganèse, de cuivre, de fer, de nickel et/ou d'yttrium, par séchage en lit fluidisé des particules imprégnées à 150°C pendant 1 à 2 heures, et par calcination des particules séchées entre 550 et 600°C pendant 1 à 2 heures.